# EUROPEAN PATENT APPLICATION

(11) **EP 2 811 416 A1**
(43) Date of publication of application: **10.12.2014**
(21) Application number: 13170878.6
(22) Date of filing: 06.06.2013
(51) Int. Cl.: G06F 17/30, G11B 27/32, G11B 27/28

(54) **An identification method**

(71) Applicant: Vestel Elektronik Sanayi ve Ticaret A.S., 45030 Manisa (TR)
(72) Inventor: Wyatt, Martyn, Bristol, Bristol BS16 3RY (GB)
(74) Representative: Cayli, Hülya

(57) **Abstract**

A method for identifying videos using subtitle information comprises the steps of: taking consecutive subtitle samples of a video to be identified in a predetermined number; comparing timings of said consecutive subtitle samples with subtitle timing patterns provided in a database, wherein said database comprises subtitle timing patterns, which are generated according to timings of the subtitles, for different videos; identifying the video with video information of the matched subtitle timing pattern when there is a match.

## Description

### Technical Field

The present invention is related to a method for identification of the videos.

### Prior Art

In the audio and/or video systems, it is required to identify a media (for example identifying music, film or advertisement) for several reasons. Reason for this requirement may change for different media types. For example, when a user hears a song from a radio, he/she gets information about the song using a music identifier. On the other hand, methods for identification of the video contents are generally used for preventing piracy.

There are several methods for identifying an audio. A conventional method for identifying an audio is comparing a sample piece of said audio with a database, which comprises for example audio samples of music (an exemplary embodiment is disclosed in patent document no. US6941275B1). However, this method is not practical since said database requires too much memory.

With the developing technology, speech-to-text applications become more and more accurate. Therefore, these applications are used for identifying audios. For example in order to identify an audio, a sample piece of the audio is converted to a text (for example a music is converted to lyrics) and in a database, which comprises lyrics of music, said converted text is searched for a match. Since this database comprise only text data (instead of music samples), less memory is required as compared to the conventional methods.

Similar to audio identification, there are several methods for identifying a video. A conventional method for identification of a video is using watermarks (as disclosed in US2003012548A1). Watermarks are usually used for preventing piracy by embedding a watermark to a video. When a video with said watermark is broadcasted, watermark is detected and content of the broadcasted video is able to be identified. Then, it is possible to check whether broadcaster has rights to broadcast related video or not. However, visual watermarks of the videos are able to be changed or removed. Therefore, sometimes it is not possible to identify a video by using visual watermarks.

### Brief Description of the Invention

Present invention discloses a method for identifying videos using subtitle information. Said method comprises the steps of, taking consecutive subtitle samples of a video to be identified in a predetermined number; comparing timings of said consecutive subtitle samples with subtitle timing patterns provided in a database, wherein said database comprises subtitle timing patterns, which are generated according to timings of the subtitles, for different videos; identifying the video with video information of the matched subtitle timing pattern when there is a match.

According to the present invention, videos are able to be identified by their subtitle information. Since information of the limited number of subtitles are used for identification, identification process is fast and easy. By identification of the videos, pirate broadcasting of the protected content is able to be prevented.

### Object of the Invention

The object of the invention is to provide a method for identifying a video.

Another object of the present invention is to use subtitle information for identifying a video.

Another object of the present invention is to generate a database according to subtitle information for identifying a video.

### Description of the Invention

Identifying a video is an important process, especially for preventing piracy. In conventional methods, usually visual watermarks are used for identifying a video. Since visual watermarks are easy to change, using a visual watermark may not always give accurate results. Therefore, present invention provides a method for identifying videos by subtitle information.

Most of the videos, especially movies, comprise subtitles. Subtitles of the videos comprise speech of the players (and sometimes explanations or sound effects especially for the persons having impaired hearing) and timing information (when the subtitle starts/ends). These timings depend on both speech of the players (for synchronization) and length of the subtitle. Therefore, timings of the subtitles are unique for each different video. In the present invention, uniqueness of the subtitle for the videos is used for identifying videos.

In the present invention, in order to identify videos by using subtitles, a database comprising a subtitle timing pattern is previously generated. Said subtitle timing pattern is generated according to timings of the subtitles. When each of the subtitle timing information is used, generated subtitle timing pattern become unique for the video (since subtitle timings are unique). According to the present invention, said database, comprises subtitle timing patterns for different videos (especially movies). According to the present invention, when a video is needed to be identified, consecutive subtitle samples in a predetermined number (i.e. 9 consecutive subtitles) are taken and timings of said consecutive subtitle samples are compared with the subtitle timing patterns of said database. When there is a match found, video information of the matched subtitle timing pattern is used as video information (therefore video is identified).

In a preferred embodiment of the present invention, said subtitle timing pattern is generated by using starting and/or ending times of the subtitles. In this embodiment, subtitle timing pattern comprises starting and/or ending times of the subtitles. According to this embodiment, when the consecutive subtitle samples are compared with the subtitle timing patterns of the database, preferably time gaps (time differences of the starting/ending times of the consecutive subtitles) between subtitles are used for finding a match. In detail, firstly durations of time gaps between the consecutive subtitle samples are calculated. Then, calculated time gaps of the consecutive subtitle samples are compared with the time gap information of the subtitle timing patterns of the database (time gap information of the subtitle timing patterns may already be present at said database or may be calculated by timing information of the subtitle timing patterns). Therefore, according to this embodiment video is able to be identified even if real subtitle time information (exact minute, second information) of the consecutive subtitles samples are not known (since time gaps between consecutive subtitle samples are used).

In another preferred embodiment of the present invention, during the step of comparing consecutive subtitle samples with the subtitle timing patterns of the database, ratios of the consecutive time gaps are used for finding a match. By using time gap ratio instead of time gap information, even if the fps (frame per second) of the video to be identified is different than fps of the video, whose subtitle timing information is used for generating said database, correct match is able to be found.

In another embodiment of the present invention, video to be identified is a broadcasted video. In this embodiment, the step of comparing consecutive subtitle samples with the subtitle timing patterns of the database may be performed by a television, a set top box or a video recorder (such as vcr (video cassette recorder) or a digital recorder). According to this embodiment, said database may be stored in a memory of said television, set top box or recorder, as well as may be stored in a remote server (which may be accessed by a communication protocol such as internet connection). With this embodiment, when video is identified, it is possible to check whether broadcaster has rights to broadcast identified video or not. Furthermore, it is also possible to prevent recording said video using a recorder, if it is illegal to record identified video. Therefore, piracy by broadcasting is able to be prevented.

In another embodiment of the present invention when a video is identified, subtitle timing pattern of the identified video is used for recording operation. In this embodiment, video recorder generates subtitle timing pattern for recorded video. Then generated subtitle timing pattern of recorded video is compared with the subtitle timing pattern of the video provided in a database. If generated subtitle timing pattern of recorded video comprises extra subtitle parts, said parts are identified as irrelevant (for example advertisement) and irrelevant parts are removed from the recorded media. Alternatively, this operation may be performed during the recording of the video. In this embodiment, when a video is being recorded, timing information of the currently recorded video is compared with the subtitle timing pattern of the video provided in the database. If timing of a current subtitle does not match with the subtitle timing pattern of the database, video recording stops until a video with matching subtitle information received.

In another preferred embodiment of the present invention, if there is more than one match is found during the comparison step, different consecutive subtitle samples are used for comparison. Preferably, during the second comparison (with different subtitle samples), subtitle timing patterns of the firstly matched videos are used instead of said database.

In a preferred embodiment of the present invention, subtitle information of the video to be identified is available (for example as a text). Alternatively, said subtitle information is generated by using a speech to text application. By using the speech to text applications, videos that do not contain a subtitle (or videos containing embedded subtitle) are able to be identified. Furthermore, by using speech to text applications in order to generate the subtitle information, pirate broadcasting of the protected content is able to be prevented even a different subtitle (i.e. subtitle with slightly different timings) is used.

According to the present invention, videos are able to be identified by their subtitle information. Since information of the limited number of subtitles are used for identification, identification process is fast and easy. By identification of the videos, pirate broadcasting of the protected content is able to be prevented.

## Claims

1. A method for identifying videos comprising subtitle information **characterized in that** the method comprises the steps of;
- taking consecutive subtitle samples of a video to be identified in a predetermined number;
- comparing timings of said consecutive subtitle samples with subtitle timing patterns provided in a database, wherein said database comprises subtitle timing patterns, which are generated according to timings of the subtitles, for different videos;
- identifying the video with video information of the matched subtitle timing pattern when there is a match.

2. A method according to claim 1 **characterized in that**; said subtitle timing pattern is generated by using starting and/or ending times of the subtitles.

3. A method according to claim 1 or 2 **characterized in that**; at the comparison step, time gaps between subtitles are used for finding a match.

4. A method according to claim 1 or 2 **characterized in that**; at the comparison step, ratios of the consecutive time gaps are used for finding a match.

5. A method according to claim 1 **characterized in that**; at the comparison step if there is more than one match, a second comparison step is performed using different consecutive subtitle samples of the video to be identified.

6. A method according to claim 1 **characterized in that**; the video to be identified is a broadcasted video.

7. A method according to claim 1 **characterized in that**; the subtitle information of the video to be identified is obtained by using a speech to text application.
